# FASCICULE DE BREVET EUROPEEN

(11) **EP 2 155 606 B1**
(45) Date de publication et mention de la délivrance du brevet: **03.08.2011**
(21) Numéro de dépôt: 08760376.7
(22) Date de dépôt: 02.06.2008
(51) Int. Cl.: C01B 25/08, B82B 3/00

(54) **PROCEDE DE SYNTHESE DE MATERIAUX PHOSPHURES**
VERFAHREN ZUR SYNTHESE VON PHOSPHIDMATERIAL
METHOD OF SYNTHESIZING PHOSPHIDE MATERIALS

(30) Priorité: 05.06.2007 FR 0755455
(43) Date de publication de la demande: 24.02.2010
(73) Titulaire: Ecole Polytechnique, 91128 Palaiseau Cedex (FR)
(72) Inventeur: LE FLOCH, Pascal, F-91400 Orsay (FR); MEZAILLES, Nicolas, F-91530 Saint Maurice Montcouronne (FR); LE GOFF, Xavier, F-91220 Bretigny Sur Orge (FR); DUBERTRET, Benoît, F-75014 Paris (FR)
(74) Mandataire: Esselin, Sophie
(86) Numéro de dépôt international: PCT/EP2008/056790
(87) Numéro de publication internationale: WO 2008/148738

(56) Documents cités:
- EP-A- 0 028 315
- US-A- 4 185 081
- J. M. NEDELJKOVIC, O. I. MICIC, S. P. AHRENKIEL, A. MIEDANER, A. J. NOZIK: "Growth of InP Nanostructures via Reaction of Indium Droplets with Phosphide Ions: Synthesis of InP Quantum Rods and InP -TiO2 Composites" JOURNAL OF THE AMERICAN CHEMICAL SOCIETY, vol. 126, no. 8, 3 mars 2004 (2004-03-03), pages 2632-2639, XP002465603 AMERICAN CHEMICAL SOCIETY, WASHINGTON, DC, US cité dans la demande
- JONGNAM PARK, BONIL KOO, KI YOUL YOON, YOSUN HWANG, MISUN KANG, JE-GEUN PARK,TAEGHWAN HYEON: "Generalized Synthesis of Metal Phosphide Nanorods via Thermal Decomposition of Continuously Delivered Metal-Phosphine Complexes Using a Syringe Pump" JOURNAL OF THE AMERICAN CHEMICAL SOCIETY, vol. 127, no. 23, 15 juin 2005 (2005-06-15), pages 8433-8440, XP002465604 AMERICAN CHEMICAL SOCIETY, WASHINGTON, DC, US cité dans la demande
- BUDNIKOVA YU H, TAZEEV D I, TROFIMOV B A, SINYASHIN O G: "Electrosynthesis of nickel phosphides on the basis of white phosphorus" ELECTROCHEM. COMMUN.; ELECTROCHEMISTRY COMMUNICATIONS JULY 2004, vol. 6, no. 7, juillet 2004 (2004-07), pages 700-702, XP002465637 ELSEVIER, AMSTERDAM, NL

## Description

L'invention se rapporte à un procédé de synthèse original de composé MₓPy à partir de phosphore pur. Le composé M peut être un métal ou tout autre élément appartenant à l'une des colonnes Il à XV du tableau de la classification périodique, ou bien encore tout élément appartenant à la famille des lanthanides ou des actinides.

De tels matériaux trouvent un intérêt dans des domaines d'applications très variés, qui sont tous ceux des « métaux-phosphures » connus. On peut notamment citer des applications de ferro-aimants magnétiques pour MnP et FeP, des applications de catalyseurs d'hydrodésulfuration pour Ni₂P, de matériaux luminescents compatibles avec les milieux biologiques, de micro et optoélectronique pour InP, et de l'électronique pour GaP. Ces deux derniers sont aussi utilisés dans le domaine de l'énergie photovoltaïque.

Différents procédés de synthèse ont été proposés à ce jour pour synthétiser des « métaux phosphures » parmi lesquels on peut citer FeP, MnP, Ni₂P, PtP₂, InP, GaP, utilisant des produits intermédiaires de synthèse et proposant généralement une double thermolyse d'un précurseur métallique et d'un donneur d'atome de phosphore.

On peut ainsi citer la synthèse de Ni₂P comportant la décomposition thermique de Ni(acac)₂ à 210°C, puis la réaction avec un composé phosphine P(n-octy))₃ à 330°C. Cette température de 330°C est nécessaire à la décomposition de P(octyl)₃ qui sert de « donneur d'atomes de phosphore par rupture des liaisons phosphore-carbone» comme décrit dans la publication : « Generalized Synthesis of Metal Phosphide Nanorods via Thermal Decomposition of Continuously Delivered Metal-Phopshine Complexes Using a Syringe Puma », de Jongman Park, Bonil Koo, Ki Youl Yoon, Yosun Hwang, Misun Kang, Je-Geun, and Taeghwan Hyeon, J.AM.CHEM.SOC.2005, 127, 8433-84.40. Aucun contrôle de la stoechiométrie n'est donc possible ; (P(n-octylh est utilisé comme solvant de la réaction). Il n'est donc possible d'avoir accès qu'à la phase MₓPy stable à cette température, Ni₂P dans ce cas.

Dans le cas du Pt (même colonne que Ni), cette synthèse conduit à PtP₂, avec donc une stoechiométrie inversée. L'accès à un composé de stoechiométrie différente n'est donc pas possible avec ce type de procédé.

Les synthèses de FeP et MnP suivent un principe analogue. La méthode est limitée par la température de décomposition de P(n-octyl)₃, supérieure à 330°C.

Concernant la Synthèse de InP, il est connu de procéder à la décomposition thermique de divers précurseurs d'indium du type : Cpln (avec Cp = cyclopentadiényle), Cp*In (avec Cp* = pentamethylecyclopentadiényle) ou In(C(CH₃)₃)₃ en nanoparticules d'In(0) suivi d'une réaction avec P(SiMe₃)₃, précurseur qui est hydrolysé in situ en PH₃, comme décrit dans la publication « Growth of InP Nanostructures via Reaction of Indium Droplets with Phosphide lons : Synthesis of InP Quantum Rods and InP-TiO2 Composites » de Jovan M.Nedeljkovic, Olga I.Micic, S.Philip Ahrenkiel, Alex Miedaner, and Arthur J.Nozik , J. AM.CHEM.SOC.2004, 126, 2632-2639. Le composé, P(SiMe₃)₃ est non seulement très cher, car sa synthèse est délicate et extrêmement dangereuse, et il s'hydrolyse de plus très facilement en PH₃ à l'air, produit excessivement toxique (mortel à très faible proportion dans fair, CL50 [ppm/1 h] = 20).

Dans ce contexte la présente invention propose un procédé de synthèse mettant en oeuvre une réaction stoechiométrique permettant un excellent rendement de réaction sans perte de composés initiaux contrairement aux procédés de synthèse de l'art connu. Le procédé de la présente invention permet ainsi d'avoir accès à un ensemble de stoechiométries MₓPy, qui correspondent aux phases thermodynamiquement stables à la température de la réaction et en particulier dans la gamme 10°C-100°C.

Plus précisément la présente invention a pour objet un procédé de synthèse d'un composé MₓPy avec M étant un élément appartenant à l'une des colonnes Il à XV du tableau de la classification périodique des éléments ou à la famille des lanthanides ou à la famille des actinides, caractérisé en ce qu'il comprend :
la réaction de x moles de composé comportant l'élément M sous son état d'oxydation 0 avec y/4n moles de composé (P₄)ₙ.

Selon une variante de l'invention, la réaction de x moles de composé comportant l'élément M sous son état d'oxydation 0 avec y/4n moles de composé (P₄)ₙ est effectuée en présence d'un solvant faiblement coordinant pour permettre la formation de nanoparticules de MxPy.

Selon une variante de l'invention, le composé (P₄)ₙ est le phosphore blanc P₄.

Avantageusement, le composé (P₄)ₙ est mis en solution dans du toluène pour réaliser la synthèse selon l'invention.

Selon une variante de l'invention, l'élément M est Ni, n étant égal à 1, x étant égal à 2 et y étant égal à 1.

Selon une variante de l'invention, le composé comportant Ni est Ni(C₈H₁₂) dans lequel Ni est sous son état d'oxydation 0.

Selon une variante de l'invention, la réaction est en outre effectuée en présence de oleyamine permettant la formation de nanoparticules de Ni₂P.

Selon une variante de l'invention, l'élément M étant In, le composé comportant In est (C₅H₅)In, il peut également être (C₅(CH₃)₅)In.

L'invention sera mieux comprise et d'autres avantages apparaîtront à la lecture de la description qui va suivre et qui est donnée à titre non limitatif.

L'intérêt d'utiliser dans le procédé de synthèse de l'invention, du phosphore blanc P₄ voire du phosphore rouge (P₄)ₙ, réside également (en plus de l'intérêt de réaction stoechiométrique à fort rendement) dans le fait de pouvoir réaliser une réaction dite douce, c'est à dire à basse température avec donc un gain énergétique élevé. En effet, le phosphore P₄ possède un arrangement de quatre liaisons de faible énergie au sein d'un tétraèdre, et donc aisément susceptibles d'être scindées pour créer des liaisons avec d'autres composés. La présente invention tire donc partie de la faiblesse des liaisons P-P dans le réactif P₄, permettant des températures de réaction beaucoup plus basses que celles observées dans les synthèses déjà reportées (de l'ordre de 300°C pour décomposer par exemple P(n-octy)₃).

De même selon le procédé de l'invention, il devient possible de former des nanoparticules cristallines à basse température.

L'invention propose une méthode de synthèse très simple de métaux phosphures, parmi lesquels Ni₂P, InP, GaP, FeP, MnP, en utilisant le produit de base de la chimie du phosphore: le phosphore blanc P₄. Cette méthode diffère donc largement des diverses méthodes permettant l'accès à ces espèces. De plus cette méthode est générale, et ne dépend que du choix judicieux du précurseur métallique. Ainsi, la décomposition thermique dudit précurseur, à basse température, en présence de P₄ et de solvant/ligand stabilisant, permet d'obtenir des nanoparticules de « métaux-phosphures ».

La réaction d'un précurseur métallique (source de M), en solution dans un solvant approprié, avec une stoechiométrie choisie de P₄, lui-même en solution dans du toluène, à température ambiante ou à tout autre température comprise entre 10°C et 300°C, conduit à la formation quasi quantitative et à la précipitation d'un solide amorphe de MₓP_{y} (de stoechiométrie correspondant à la phase stable à cette température).

### Exemple de procédé de synthèse selon l'invention du composé Ni₂P

Le composé Ni(COD)₂ (0.5 mmol) est dissout sous atmosphère inerte dans du toluène et mis sous agitation. Plus précisément, le Ni(COD)₂ est le bis(1,5-cyc)ooctadiene)Ni dont la structure est la suivante :

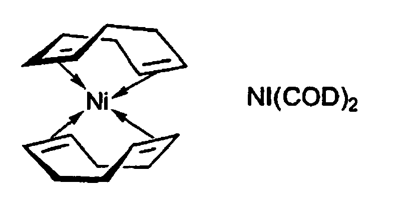

Une solution de P₄ (0.06 mmol) en solution dans du toluène est alors ajoutée goutte à goutte, conduisant à la formation instantanée d'un solide noir amorphe de Ni₂P. Celui-ci est isolé par simple filtration, lavé et séché. L'analyse par rayons X sur poudre révèle le caractère amorphe du matériau. Un recuit du matériau conduit à la formation de Ni₂P cristallin comme attesté par diffraction RX de poudres.

Pour obtenir des nanoparticules de Ni₂P on utilise un co-solvant particulier, faiblement coordinant pouvant notamment être de l'oleyamine de formule chimique suivante : CH₃(CH₂)₇CH=CH(CH₂)₈NH₂. La synthèse de nanoparticules se réalise comme suit :

Le composé Ni(COD)₂ (0.5 mmol) est dissout dans un solvant faiblement coordinant (oleyamine par exemple, 5 mmol) et chauffé à 100°C pendant deux heures. Le composé P₄ (0.06 mmol) en solution est alors ajouté et la solution chauffée à 100°C pendant une heure. Les nanoparticules de Ni₂P sont ensuite précipitées avec un solvant polaire, lavées et redispersées dans un solvant non polaire. Typiquement le solvant polaire peut être de l'acétone, le solvant non polaire pouvant être de l'hexane.

Ainsi dans l'exemple présenté concernant le nickel, le choix judicieux du précurseur, permet de synthétiser des nanoparticules de nickel sous l'état d'oxydation 0 : Ni(O) à basse température (100°C). A titre de comparaison, il est reporté que Ni(acac)₂ (avec acac = acetylacetonate) se décompose à des températures supérieures à 210°C en présence de solvant coordinant pour former des nanoparticules de Ni(0) selon l'art antérieur.

### Exemple de procédé de synthèse selon l'invention du composé InP

Le composé (C₅H₅)ln est mis en solution dans un solvant (toluène par exemple), à température ambiante et mis sous agitation. Le composé (C₅H₅)In peut aisément être obtenu à partir de INCl et de LiC₅H₅ en solution dans du diethyl ether.

On peut tout aussi bien utiliser le composé (C₅(CH₃)₅)ln.

Pour obtenir des nanoparticules de InP on utilise un co-solvant particulier, faiblement coordinant pouvant notamment être de l'oleyamine de formule chimique suivante : CH₃(CH₂)₇CH=CH(CH₂)₈NH₂. La synthèse de nanoparticules se réalise comme suit :

Le composé (C₅H₅)In (0.5 mmol) est dissout dans un solvant faiblement coordinant (oleyamine par exemple, 5 mmol) et chauffé à 70°C pendant une heure. Le composé P₄ (0.5 mmol) en solution est alors ajouté et la solution chauffée à 100°C pendant une heure. Les nanoparticules de InP sont ensuite précipitées avec un solvant polaire, lavées et redispersées dans un solvant non polaire. Typiquement le solvant polaire peut être de l'acétone, le solvant non polaire pouvant être de l'hexane.

## Revendications

1. Procédé de synthèse d'un composé MₓP_{y} avec M étant un élément appartenant à l'une des colonnes Il à XV du tableau de la classification périodique des éléments ou à la famille des lanthanides ou à la famille des actinides, **caractérisé en ce qu'**il comprend :
la réaction de x moles de composé comportant l'élément M sous son état d'oxydation 0 avec y/4n moles de composé (P₄)ₙ.

2. Procédé de synthèse selon la revendication 1, **caractérisé en ce que** la réaction de x moles de composé comportant l'élément M sous son état d'oxydation 0 avec y/4n moles de composé (P₄)ₙ est effectuée en présence d'un solvant faiblement coordinant pour permettre la formation de nanoparticules de MₓP_{y}.

3. Procédé de synthèse selon l'une des revendications 1 ou 2, **caractérisé en ce que** le composé (P₄)ₙ est le phosphore blanc P₄.

4. Procédé de synthèse selon la revendication 3, **caractérisé en ce que** l'élément M est Ni, x étant égal à 2 et y étant égal à 1.

5. Procédé de synthèse selon la revendication 4, **caractérisé en ce que** le composé comportant Ni est Ni(C₈H₁₂)₂ dans lequel Ni est sous son état d'oxydation 0.

6. Procédé de synthèse selon l'une des revendications 1 à 5, **caractérisé en ce que** la réaction est effectuée en présence de toluène.

7. Procédé de synthèse selon l'une des revendications 5 ou 6, **caractérisé en ce que** la réaction est en outre effectuée en présence de oleyamine permettant la formation de nanoparticules de Ni₂P.

8. Procédé de synthèse selon l'une des revendications 1 à 3, **caractérisé en ce que** M étant In, x étant égal à 1 et y étant égal à 1, le composé comportant In est (C₅H₅)ln.

9. Procédé de synthèse selon l'une des revendications 1 à 3, **caractérisé en ce que** l'élément M étant In, le composé comportant In est (C₅(CH₃)₅)ln.

## Claims

1. A process for synthesising a compound MₓP_{y}, with M being an element belonging to one of groups II to XV of the periodic table of elements or to the group of lanthanides or to the group of actinides, **characterised in that** it comprises:
the reaction of x moles of a compound comprising element M in its oxidation state 0 with the y/4n moles of compound (P₄)ₙ

2. The synthesis process according to claim 1, **characterised in that** the reaction of x moles of a compound comprising element M in its oxidation state 0 with the y/4n moles of compound (P4)ₙ is undertaken in the presence of a weakly coordinating solvent to allow the formation of nanoparticles of MₓP_{y}.

3. The synthesis process according to any one of claims 1 to 2, **characterised in that** said compound (P₄)n is white phosphorus P₄.

4. The synthesis process according to claim 3, **characterised in that** the element M is Ni, x being equal to 2 and y being equal to 1.

5. The synthesis process according to claim 4, **characterised in that** the compound comprising Ni is Ni(C₈H₁₂)₂, wherein Ni is in its oxidation state 0.

6. The synthesis process according to any one of claims 1 to 5, **characterised in that** the reaction is undertaken in the presence of toluene.

7. The synthesis process according to any one of claims 5 to 6, **characterised in that** the reaction is also undertaken in the presence of oleyamine allowing the formation of nanoparticles of Ni₂P.

8. The synthesis process according to any one of claims 1 to 3, **characterised in that** if M is In, x is equal to 1 and y is equal to 1, then the compound comprising In is (C₅H₅)In.

9. The synthesis process according to any one of claims 1 to 3, **characterised in that** if element M is In, then the compound comprising In is (C₅(CH₃)₅)In.

## Patentansprüche

1. Verfahren zum Synthetisieren einer Verbindung MₓP_{y}, wobei M ein Element ist, das zu einer der Gruppen II bis XV des periodischen Elementesystems oder zur Gruppe der Lanthanide oder zur Gruppe der Aktinide gehört, **dadurch gekennzeichnet, dass** es Folgendes beinhaltet:
Reagieren von x Molen einer Verbindung, die das Element M in seinem Oxidationszustand 0 enthält, mit y/4n Molen der Verbindung (P₄)ₙ·

2. Syntheseverfahren nach Anspruch 1, **dadurch gekennzeichnet, dass** die Reaktion von x Molen der Verbindung, die das Element M in seinem Oxidationszustand 0 enthält, mit y/4n Molen der Verbindung (P₄)ₙ, in Anwesenheit eines schwach koordinierenden Lösungsmittels erfolgt, um die Bildung von Nanopartikeln von MₓP_{y} zuzulassen.

3. Syntheseverfahren nach Anspruch 1 oder 2, **dadurch gekennzeichnet, dass** die Verbindung (P₄)ₙ weißer Phosphor P₄ ist.

4. Syntheseverfahren nach Anspruch 3, **dadurch gekennzeichnet, dass** das Element M Ni ist, wobei x gleich 2 und y gleich 1 ist.

5. Syntheseverfahren nach Anspruch 4, **dadurch gekennzeichnet, dass** die Ni enthaltende Verbindung Ni(C₈H₁₂)₂ ist, wobei Ni in seinem Oxidationszustand 0 ist.

6. Syntheseverfahren nach einem der Ansprüche 1 bis 5, **dadurch gekennzeichnet, dass** die Reaktion in Anwesenheit von Toluol stattfindet.

7. Syntheseverfahren nach Anspruch 5 oder 6, **dadurch gekennzeichnet, dass** die Reaktion auch in Anwesenheit von Oleylamin stattfindet, das die Bildung von Nanopartikeln von Ni₂P zulässt.

8. Syntheseverfahren nach einem der Ansprüche 1 bis 3, **dadurch gekennzeichnet, dass**, wenn M In ist, x gleich 1 und y gleich 1 ist, die In enthaltende Verbindung (C₅H₅)In ist.

9. Syntheseverfahren nach einem der Ansprüche 1 bis 3, **dadurch gekennzeichnet, dass**, wenn das Element M In ist, die In enthaltende Verbindung (C₅(CH₃)₅)In ist.
